# EUROPEAN PATENT APPLICATION

(11) **EP 2 711 638 A1**
(43) Date of publication of application: **26.03.2014**
(21) Application number: 13184953.1
(22) Date of filing: 18.09.2013
(51) Int. Cl.: F24D 15/04, F24F 5/00, F24J 3/08

(54) **Arrangement for cooling a room in connection with a heating system**

(30) Priority: 19.09.2012 FI 20125967
(71) Applicant: Reiman, Tuure, 40250 Jyväskylä (FI)
(72) Inventor: Reiman, Tuure, 40250 Jyväskylä (FI)
(74) Representative: Helke, Kimmo Kalervo

(57) **Abstract**

The invention relates to an arrangement for cooling a room in connection with a heating system, which heating system (12) includes
- a ground source heat pump unit (15) equipped with inlet and outlet connections (64, 62) arranged in the room (14) to be heated for heating the room (14),
- a heat collection circuit (20) filled with liquid, connected to the said ground source heat pump unit (15), the said heat collection circuit comprising at least one bore well (42) for heating the liquid,
- a room (43) to be cooled, and
- a heat exchanger (32) situated in the room (43) to be cooled,

The heating system (12) includes means (25) for leading at least part of the liquid of the heat collection circuit (20) returning from the ground source heat pump unit (15) to the said heat exchanger (33) for cooling the said room (43) and back from the heat exchanger (33) to the heat collection circuit (20).

## Description

The present invention relates to an arrangement for cooling a room in connection with a heating system, which heating system includes
- a ground source heat pump unit equipped with inlet and outlet connections arranged in the room to be heated for heating the room,
- a heat collection circuit filled with liquid, connected to the ground source heat pump unit, the heat collection circuit comprising at least one bore well for heating the liquid,
- a room to be cooled, and
- a heat exchanger situated in the room to be cooled.

An immense amount of energy is used annually for cooling various interior spaces. At the same time, heat may also be needed for heating other interior spaces. Generally, it is known to cool rooms, for example with the aid of air source heat pumps or a similar device. In these solutions, however, operating costs are high, due to poor efficiency.

Generally, it is also known to use a ground source heat pump system to heat interior spaces. In a ground source heat pump system, a medium is circulated through piping sunk in the ground, so that heat is bound to the medium. Through phase changes, the heat bound in the medium is released to the room with the aid of a condenser and the medium is again led back under the ground.

From the prior art a Finnish system is known, marketed under the product name LÄMPÖÄSSÄ, in which medium coming from the ground source heat pump system's condenser located in the room, which medium has yielded its heat, is used in a separate cooling circuit. In this solution, the cooling circuit is, however, nearly the same in construction as the ground source heat pump system, i.e. it is markedly complicated and expensive.

The invention is intended to create an arrangement for cooling a room in connection with a ground source heat pump system, which is cheaper than solutions according to the prior art. The characteristic features of the present invention are stated in the accompanying Claim 1.

This intention can be achieved by means of an arrangement for cooling a room in connection with a heating system, which heating system includes a ground source heat pump unit equipped with inlet and outlet connection arranged in the room to be heated for heating the room, a heat collection circuit filled with a liquid connected to the ground source heat pump unit, the heat collection circuit comprising at least one bore well to heat the liquid. In addition, the heating system includes a room to be cooled and a heat exchanger situated in the room to be cooled. The heating system further includes means for leading at least part of the heat collection liquid returning from the ground source heat pump unit to the heat exchanger to cool the room and from the heat exchanger back to the heat collection circuit. With the aid of the heat exchanger, the liquid returning from the ground source heat pump unit can bind to itself heat from the room to be cooled. The solution is very simple and cheap to implement.

Preferably, the means are arranged to guide the heat collection circuit directly to the heat exchanger. Thus, the construction of the heating system remains as simple as possible.

Preferably, the means are a cooling circuit. With the aid of a separate cooling circuit, the cooled liquid of the heat collection circuit can be used for cooling the room to be cooled, while at the same time pre-heating the liquid returning to the bore well.

Preferably, the room to be cooled is a cold storage room. A cold storage room requires cooling continuously and is thus very suitable in connection with the arrangement according to the invention.

Preferably, the heat exchanger is a liquid air radiator. In terms of investment costs, a liquid air radiator is a cheap alternative.

Preferably, the means include an inlet line and a return line connected to the line belonging to the heat collection circuit, returning from the ground source heat pump unit to lead the liquid to the heat exchanger and from there back to the line. With the aid of the inlet and return lines, at least part of the liquid of the heat collection circuit is captured for cooling the room to be cooled.

The inlet line and return line can be connected to the line at an angle that is at most 90°, preferably 30 - 60° relative to the flow direction of the liquid flowing in the line. Thus, the flow velocity remains good also in the inlet and return lines going to the heat exchanger.

Preferably, the arrangement includes a pump for regulating the flow led from the heat collection circuit to the heat exchanger. Thus, the temperature of the room to be cooled can be adjusted simply, by controlling the operation of the pump.

The air liquid radiator can be arranged to be connected to the pump directly by means of the inlet line or the return line. By using a direct connection, unnecessary intermediary stages are avoided and the structure of the arrangement is made as simple as possible.

According to one embodiment, the arrangement includes a temperature sensor to be installed in the room to be cooled and a regulating unit controlling the pump, which regulating unit is arranged to control the pump on the basis of the measurement result of the temperature sensor. With the aid of the temperature sensor and the regulating unit of the pump, a feedback control system is created for the arrangement, which regulates the operating of the pump according to the temperature of the room to be cooled.

The bore well can be 80 - 300 m, preferably 100 - 150 m deep. In a deep bore well, the ground temperature will be sufficiently warm even in the most severe winter, but also sufficiently low in summer for the arrangement to operate efficiently the whole year round.

It can be arranged to lead 5 - 60 volume percent, preferably 20 - 40 volume percent of the return flow of the heat collection circuit to the heat exchanger. The volume flow going to the heat exchanger will then be sufficient to create effective cooling.

The target temperature of the room to be cooled can be 2 - 12 ° C, preferably 5 - 8 °C. The temperature of the return flow of the liquid coming from the ground source heat pump unit will then be sufficiently low to cool the room to be cooled.

According to one embodiment, the arrangement includes a condensation water removal system, for collecting moisture condensing of the surface of the heat exchanger. Thus, moisture is removed from the room to be cooled, so that it is prevented from dropping onto the floor of the room to be cooled.

According to one embodiment, the removal system includes a trough for collecting condensation water and a line for leading the condensation water to a drain. Such a removal system is cheap and simple to manufacture.

Preferably, the term cold storage room refers to a room, the volume of which is greater than one cubic metre. Preferably, the volume of the cold storage room is, however, greater than four cubic metres.

According to one embodiment, the inlet line and return line are connected to the line of the heat collection circuit at an angle that is 10 - 60°, preferably 30 - 50° relative to the direction of flow of the liquid in the line. Connections at an angle are smooth and cause a considerably smaller pressure loss than right-angled connections. In other words, the flows separate from each other and join with each other smoothly.

By means of the arrangement according to the invention, markedly simple cooling is achieved, which exploits the heating system and operates without disturbing it. The solution is very cheap to manufacture and can also be made as a retrofit, if the heating system is suitable for the arrangement.

In the following, the invention is described in detail with reference to the accompanying drawings showing some embodiments of the invention, in which
- Figure 1: shows a schematic diagram of one embodiment of the arrangement according to the invention,
- Figure 2: shows a schematic diagram of a second embodiment of the arrangement according to the invention,
- Figure 3a: shows a schematic diagram of a connection according to one embodiment, and
- Figure 3b: shows a schematic diagram of a connection according to a second embodiment.

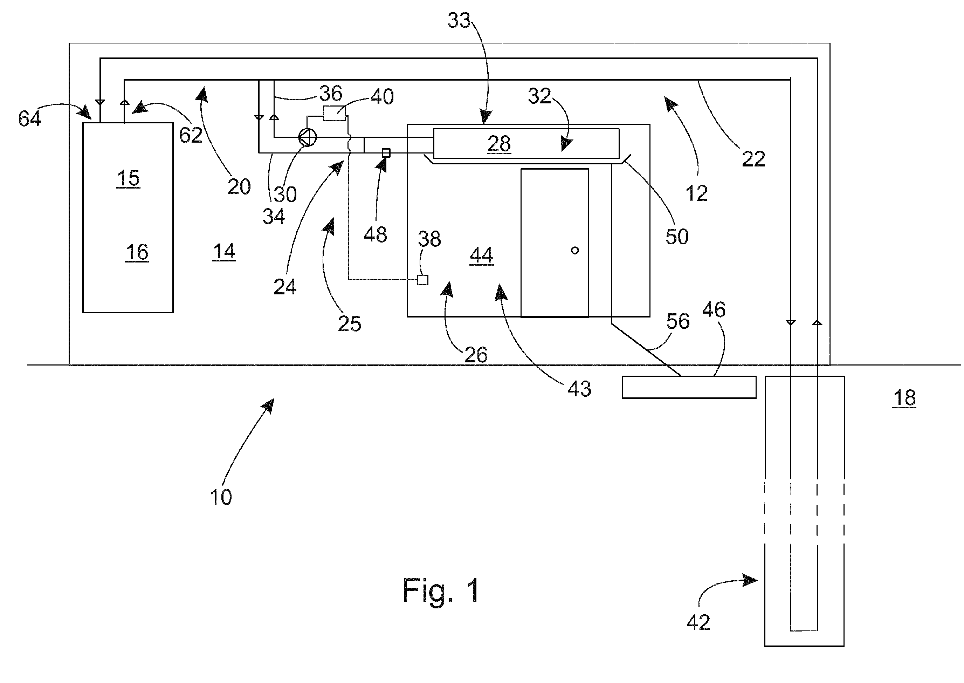

The arrangement according to the invention is shown on a schematic level in Figure 1. According to the figure, the arrangement is intended for cooling rooms, in a location in which other rooms are also heated. In a preferred embodiment of the arrangement 10, there is a room 14 to be heated, for example, a living room, a room 43 to be cooled, and the heating system 12 is a ground source heat pump system. The room 43 to be cooled is preferably a cold storage room, which will be used as an example hereinafter. In the ground source heat pump system, a bore well 42 is used as a heating and cooling source. In the arrangement according to the invention, the heating system 12 includes a ground source heat pump unit 15 installed in the room 14 to be heated and equipped with inlet and outlet connections 64 and 62, and a heat collection circuit 20, at least partly sunk into the ground 18, coming from and returning to the ground source heat pump unit 15. The ground source heat pump unit 15 heats the room when the refrigerant circulating in the condenser of the heat pump condenses, thus releasing heat at the same time cooling itself. The medium, i.e. liquid, of the heat collection circuit 20 is circulated in the heat collection circuit from the ground source heat pump unit 15 back under the ground 18, where the heat contained in the ground transfers to the liquid, raising its temperature. The heating system 12 can be completely like usual ground source heat pump systems, in which the ground source heat pump unit includes not only a ground source heat pump, but also an expansion valve, a compressor and the necessary control means, as well as lines and conductors. A glycol-water mixture, for example, can be used as the heat transfer liquid.

In the arrangement, the heating system 12 includes means 25 for leading at least part of the heat collection circuit's 20 liquid returning from the ground source heat pump unit 15 to the heat exchanger 33 to cool the room 43, and from the heat exchanger 33 back to the heat collection circuit 20. Preferably the means 25 can be a cooling circuit 24, which is connected to the line 22 of the heat collection circuit 20 coming from the ground source heat pump unit 15, to lead the liquid coming from the ground source heat pump unit 15 to the cold storage room 44 to bind the heat. The cooling circuit 24 can be two lines connected to the line 22, one of which captures at least part of the liquid flow to be returned to the underground line 22 of the heat collection circuit 20 and the other returns it to the line 22. More specifically, the cooling circuit 24 of the arrangement includes a inlet line 34 and a return line 36. The cooling circuit 24 is extremely simple in construction and at its simplest it includes only a heat exchanger 33 situated in the cold storage room 44, in addition to the inlet and return lines 34 and 36. Preferably, the heat exchanger is a liquid air radiator, but it can also be some other heat exchanger suitable for the purpose. Hereinafter, when reference is made to an air liquid radiator it should be understood that some other heat exchanger can replace it. The cooling circuit 24 uses cooled liquid coming from the ground source heat pump unit, the temperature of which is lower than the temperature of the cold storage room 44. Thus, the liquid air radiator simply transfers the heat in the air of the cold storage room 44 to the liquid, so that the temperature of the cold storage room 44 drops.

According to Figure 1, the cooling circuit preferably includes a pump 30 for regulating the medium flow taken from the heat collection circuit 20 of the cooling circuit 24. With the aid of the operating speed of the pump 30, precisely enough liquid can be pumped to cool the cold-storage room 44 to a suitable temperature. The pump used can be a conventional water circulation pump, for example a diaphragm pump. Preferably, a normal radiator, in which there is a sufficiently large heat transfer surface area to achieve efficient heat transfer, can be used as the liquid air radiator 32. The radiator can be a normal water circulation radiator. Alternatively, there can be several liquid air radiators in series, for example two radiators located on opposite walls. The liquid circulates in the liquid air radiator 32, cooling the structure of the liquid air radiator 32 and through it the surrounding air. Moisture in the air of the cold storage room 44 can condense against the cold surface of the liquid air radiator, but the arrangement can be equipped with a condensation water removal system 52. The removal system 52 can be, for example, a trough 50, in which the condensation water collects and from which it is then led along a pipe to a drain 46.

The liquid air radiator 32 is preferably connected directly to the pump 30 by means of the inlet line 34 or the return line 36 belonging to the cooling circuit 24. In other words, there are no parts between the pump 30 and the liquid air radiator 32 other than the pipes of the liquid inlet line 34 and the return line 36. Further, the return line 36 belonging to the cooling circuit 24 is preferably arranged to transfer the liquid leaving the liquid air radiator 32 directly back to the line 22 of the heat collection circuit 20. In other words, there also no parts between the liquid air radiator 22 and the line 22 of the heat collection circuit 20 other than the pipes intended for the transfer of liquid of the return line 36. By means of such a construction, the cooling circuit can be made extremely simple, reliable in operation, and cheap to manufacture. In other words, the cooling circuit of the arrangement can be constructed without a traditional solution consisting of a condenser, evaporator, and closed refrigerant circulation, which is used in, for example, refrigerators.

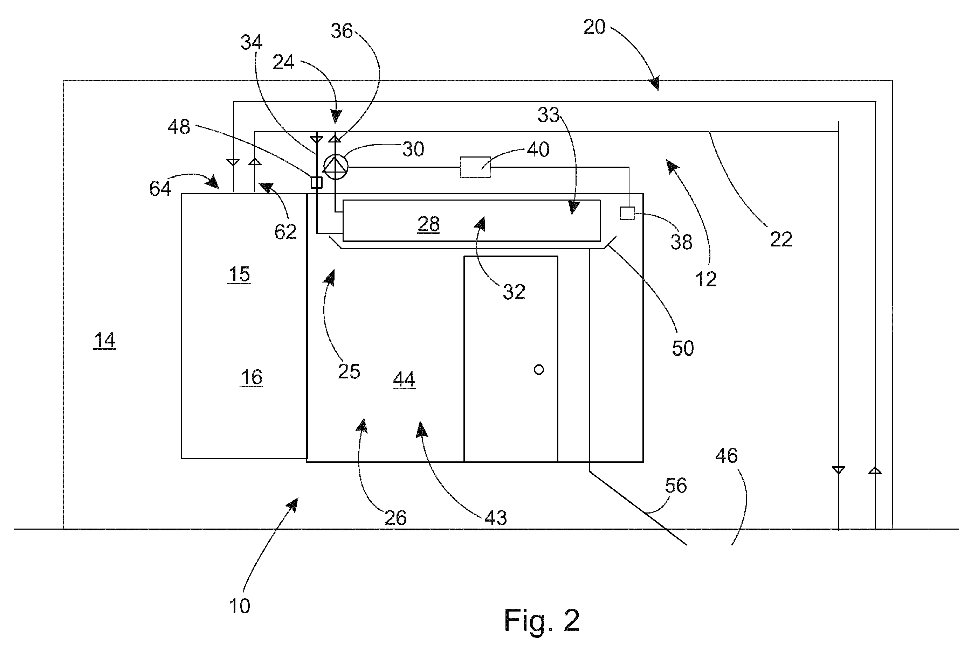

The cooling circuit's inlet line is preferably connected to the line of the heat collection circuit as close as possible to the point where the liquid achieves its lowest temperature. In this way, the liquid can be taken when it is as cold as possible to the cold storage room, when it can bind to itself as much heat as possible. Figure 2 shows a second embodiment of the arrangement according to the invention, in which the ground source heat pump 15 is situated immediately next to the cold storage room 44. Thus the distance travelled by the liquid from the ground source heat pump unit 15 to the liquid air radiator 32 is as short as possible. The embodiment of Figure 2 depicts only the part of the room 14 to be heated and does not show the underground part of the heat collection circuit 20, the bore well 42, or the drain 46, shown in Figure 1. Figure 2 should, however, be understood in such a way that the aforementioned parts, which are not shown in Figure 2, also belong to the arrangement in this second embodiment.

According to Figures 1 and 2, in order to facilitate the regulation of the temperature of the cold storage room 44 the cooling circuit 24 of the arrangement 10 preferably includes a temperature sensor 38 to be installed in the cold storage room 44 and a regulator unit 40 controlling the pump 30. The regulator unit 40 is arranged to control the pump 30 on the basis of the measurement results of the temperature sensor 38. Thus, when the temperature of the cold storage room 44 rises to the upper limit of the control limit value, for example to a temperature of +8 C, the regulator unit 40 increases the speed of rotation of the pump 30, so that the volume flow of the liquid flowing to the cooling circuit 24 increases and at the same time the cooling of the cold storage room 44 is boosted. The cooling circuit 24 can also include a magnetic valve 48, by means of which the cooling circuit 24 can be closed partially or totally. There can be continuous or only partial liquid circulation relative to time in the cooling circuit.

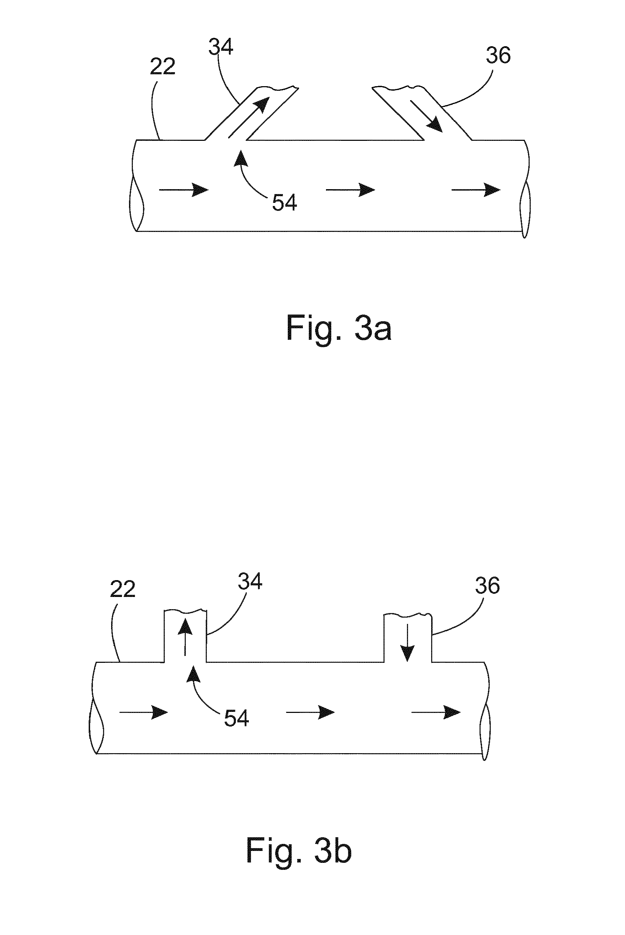

The arrangement according to the invention is used in conjunction with a ground source heat pump system, in which the heat collection circuit 20 is arranged to be installed at least partly in a bore well 42. There can also be several bore wells. The bore well 42 extends for several tens of metres, or more than one hundred metres underground, where frost does not reach. This allows the arrangement to be used also during the coldest times in winter. In addition, this permits cooling also in summer, when the surface layers of the ground heat up considerably. If the heating system is not used during summer, the cold liquid pumped from the bore well can circulate as a free flow through the ground source heat pump unit to the cooling circuit. The cooling circuit 24 can be arranged to take 5 - 60 %, preferably 20 - 40 % of the return flow of the liquid of the line 22 of the heat collection circuit 20. In other words, there is a branch 54 in the line 22 of the heat collection circuit 20, from which the inlet line 34 of the cooling circuit 24 branches, according to Figures 3a and 3b. The return line 36 of the cooling circuit 24 connects to the line 22 of the heat collection circuit 20 after the inlet line branch 34 in the direction of flow.

Figures 3a and 3b show two alternative cooling circuit connections to the line 22 of the heat collection circuit. In Figure 3a, the branch 54 is an inlet line 34 installed at a slanting angle to the line 22. The angle between the inlet line 34 and the line 22 can be, for example, 45°. In this embodiment, the flow of the line 22 causes, in the inlet line itself, a pressure nearly corresponding to the pressure in the line 22. In the second embodiment of Figure 3b, the inlet line 34 connects to the line 22 at a right angle. The pressure loss is then greater and the pressure acting on the inlet line slightly less than in the embodiment of Figure 3a. On the other hand, the embodiment of Figure 3b is easier to implement. According to one embodiment, there can also be a 3-way valve at the branch, which guides the flow to the cooling circuit either automatically or manually.

In terms of thermal equilibrium, in one embodiment the arrangement according to the invention is such that the temperature in the bore well at a depth of more than 10 m is always in the range 4 - 8 °C, depending on the season. Thus, the temperature of the liquid of the heat collection circuit leaving the bore well is also the same 4 - 8 °C, when the liquid arrives at the ground source heat pump unit. At the heat pump unit, the liquid cools and leaves the heat pump at a temperature of about (-2 °C) - (+4 °C). Once the room to be cooled has been cooled, the cooling of the room to be cooled raises the temperature of the liquid by about +1 °C, so that the temperature of the liquid leaving the cold-storage room can be about (-1 °C) - (+5 °C).

## Claims

1. Arrangement for cooling a room in connection with a heating system, which heating system (12) includes
- a ground source heat pump unit (15) equipped with inlet and outlet connections (64, 62) arranged in the room (14) to be heated for heating the room (14),
- a heat collection circuit (20) filled with liquid, connected to the said ground source heat pump unit (15), the said heat collection circuit comprising at least one bore well (42) for heating the liquid,
- a room (43) to be cooled, and
- a heat exchanger (32) situated in the room (43) to be cooled,
**characterized in that** the heating system (12) includes means (25) for leading at least part of the liquid of the heat collection circuit (20) returning from the ground source heat pump unit (15) to the said heat exchanger (33) for cooling the said room (43) and back from the heat exchanger (33) to the heat collection circuit (20).

2. Arrangement according to Claim 1, **characterized in that** the means (25) are arranged to lead the heat collection circuit (20) directly to the heat exchanger (33).

3. Arrangement according to Claim 1 or 2, **characterized in that** the means (25) include an inlet line (34) and a return line (36), connected to the line (22) returning from the ground source heat pump unit (15) and belonging to the heat collection circuit (20), for leading the liquid to the said heat exchanger (33) and from there back to the said line (22).

4. Arrangement according to Claim 3, **characterized in that** the said inlet line (34) and return line (36) are connected to the line (22) at an angle, which is at most 90°, preferably 30 - 60° relative to the flow direction of the liquid flowing in the line (22).

5. Arrangement according to any of Claims 1 - 4, **characterized in that** the arrangement (10) includes a pump (30) to regulate the flow being led from the heat collection circuit (20) to the heat exchanger (33).

6. Arrangement according to Claim 5, **characterized in that** the said heat exchanger (33) is arranged to be connected to the said pump (30) directly by means of the inlet line (34) or return line (36).

7. Arrangement according to any of Claims 1 - 6, **characterized in that** the arrangement includes a temperature sensor (38) to be installed in the room (43) to be cooled and a regulator unit (40) controlling the pump (30), which said regulator unit (40) is arranged to control the pump (30) on the basis of the measurement result of the temperature sensor (38).

8. Arrangement according to any of Claims 1 - 7, **characterized in that** the said bore well (42) has a depth of 80 - 300 m, preferably 100 - 150 m.

9. Arrangement according to any of Claims 1 - 8, **characterized in that** 5 - 60 volume-%, preferably 20 - 40 volume-% of the return flow of the line (22) of the heat-collection circuit (20) is arranged to be led to the said heat exchanger (33).

10. Arrangement according to any of Claims 1 - 9, **characterized in that** the target temperature of the room (43) to be cooled is 2 - 12 °C, preferably 5 - 8 °C.

11. Arrangement according to any of Claims 1 - 10, **characterized in that** the arrangement includes a condensation water removal system (52) for collecting moisture condensed on the surface of the heat exchanger (33).

12. Arrangement according to any of Claims 1 - 11, **characterized in that** the said removal system (52) includes a trough (50) to collect the condensation water and a line (56) to lead the condensation water to a drain (46).

13. Arrangement according to any of Claims 1 - 12, **characterized in that** the room (43) to be cooled is a cold storage room (44).

14. Arrangement according to any of Claims 1 - 13, **characterized in that** the heat exchanger (33) is a liquid air radiator (32).
